(19) Europäisches Patentamt
European Patent Office
Office européen des brevets

(11) **EP 3 747 834 A1**

(12) **EUROPEAN PATENT APPLICATION**

(43) Date of publication:
**09.12.2020 Bulletin 2020/50**

(51) Int Cl.:
***C02F 1/44*** (2006.01)     ***C02F 101/20*** (2006.01)
***C02F 1/52*** (2006.01)

(21) Application number: **19178547.6**

(22) Date of filing: **05.06.2019**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **BASF SE**
**67056 Ludwigshafen am Rhein (DE)**

(72) Inventors:
• **Opitz, Bastian**
**67056 Ludwigshafen (DE)**
• **Malisz, Jacek**
**67056 Ludwigshafen (DE)**

• **Laufer, Sven**
**67056 Ludwigshafen (DE)**
• **Antony, Paul**
**67056 Ludwigshafen (DE)**
• **Müller, Patric**
**67056 Ludwigshafen (DE)**
• **Rauls, Matthias**
**67056 Ludwigshafen (DE)**
• **Pichlmair, Stefan**
**Iselin, NJ New Jersey 08830 (US)**

(74) Representative: **Eisenführ Speiser**
**Patentanwälte Rechtsanwälte PartGmbB**
**Postfach 10 60 78**
**28060 Bremen (DE)**

(54) **PROCESS AND SYSTEM OR APPARATUS FOR PRODUCING AN AQUEOUS LIQUID COMPRISING A REDUCED AMOUNT OF ONE OR MORE METAL COMPOUNDS**

(57)     Described is a process for producing an aqueous liquid comprising a reduced amount of one or more metal compounds from an aqueous liquid comprising an amount of one or more metal compounds and/or for retrieving one or more metal compounds from an aqueous liquid comprising an amount of one or more metal compounds, comprising the steps: providing or preparing an aqueous feed liquid comprising one or more precipitated metal compounds, subjecting at least a part of the aqueous feed liquid to filtration through at least one filter medium comprising one or more membrane filter elements to receive a retentate and a permeate, subjecting at least a part of the retentate and/or at least a part of the aqueous feed liquid to concentration of the one or more precipitated metal compounds to receive a concentrated precipitate and a metal-depleted aqueous liquid, and withdrawing at least a part of the permeate. Further described is a system or apparatus for use in a process as described here before. In addition, it is described the use of a filter medium comprising one or more membrane filter elements in combination with a concentration device, for reducing the amount of one or more precipitated metal compounds in an aqueous liquid comprising an amount of one or more precipitated metal compounds and/or for retrieving one or more precipitated metal compounds from an aqueous liquid comprising an amount of one or more precipitated metal compounds.

FIG.1

FIG.1

**Description**

The present invention relates to a process for producing an aqueous liquid comprising a reduced amount of one or more metal compounds from an aqueous liquid comprising an amount of one or more metal compounds and/or for retrieving one or more metal compounds from an aqueous liquid comprising an amount of one or more metal compounds, comprising the steps: providing or preparing an aqueous feed liquid comprising one or more precipitated metal compounds, subjecting at least a part of the aqueous feed liquid to filtration through at least one filter medium comprising one or more membrane filter elements to receive a retentate and a permeate, subjecting at least a part of the retentate and/or at least a part of the aqueous feed liquid to concentration of the one or more precipitated metal compounds to receive a concentrated precipitate and a metal-depleted aqueous liquid and withdrawing at least a part of the permeate. The present invention further relates to a system or apparatus for use in a process as described here before. In addition, the present invention relates to the use of a filter medium comprising one or more membrane filter elements in combination with a concentration device, for reducing the amount of one or more precipitated metal compounds in an aqueous liquid comprising an amount of one or more precipitated metal compounds and/or for retrieving one or more precipitated metal compounds from an aqueous liquid comprising an amount of one or more precipitated metal compounds.

Reducing the amount of one or more metal compounds in aqueous liquids often occurs as a requirement when aqueous effluents from industrial production, e.g. from battery production, are to be released into the environment. Common reduction techniques like e.g. sedimentation have been applied for this purpose but have not always led to a reduction of the amount of metal compounds in the desired degree. On the other hand, metal compounds comprised by said aqueous effluents are valuable raw materials and should therefore be retained and/or re-cycled for further use.

V. Mavrov et al. have reported in the Journal "Desalination" 157 (2003) 97-104 of new integrated processes of combining adsorption, membrane separation and flotation for heavy metal removal from wastewater.

J. MacDougal et al. have described in the Journal "Solid State Technology", ed. March 2006 (www.solid-state.com) a crossflow filtration system for heavy-metal wastewater treatment.

F. Fu et al have provided in the "Journal of Environmental Management" 92 (2011) 407-418 a review on the removal of heavy metal ions from wastewaters.

In the light of the available prior art it was a primary object of the present invention to provide a process for producing an aqueous liquid comprising a reduced amount of one or more metal compounds from an aqueous liquid comprising an amount of one or more metal compounds and/or for retrieving one or more metal compounds from an aqueous liquid comprising an amount of one or more metal compounds.

It was another object of the present invention to provide a system or apparatus which would be useful for carrying out or performing a process for producing an aqueous liquid comprising a reduced amount of one or more metal compounds from an aqueous liquid comprising an amount of one or more metal compounds and/or for retrieving one or more metal compounds from an aqueous liquid comprising an amount of one or more metal compound.

It was a further object of the present invention to extend or enhance the field of application of known filter (or filtration) media and/or of known solid matter concentration devices like sedimentation devices, e.g. in order to allow improved purification of effluents from industrial production sites and/or to allow improved recycling processes for metal compounds from industrial production which would otherwise be lost or be released into the environment.

It has now been found that the primary object and other objects of the present invention are accomplished by a process for

-    producing an aqueous liquid comprising a reduced amount of one or more metal compounds

and/or

-    retrieving one or more metal compounds,

from an aqueous liquid comprising an amount of one or more metal compounds, comprising the following steps:

P1) providing an aqueous feed liquid comprising one or more precipitated metal compounds which has a pH in the range of from $\geq 4$ to $\leq 13$ and/or (preferably "and") a temperature of $\leq 50\ °C$
and/or
preparing an aqueous feed liquid comprising one or more precipitated metal compounds from an aqueous liquid comprising metal ions, comprising adjusting in the aqueous liquid comprising metal ions a pH in the range of from

$\geq 4$ to $\leq 13$ and/or (preferably "and") a temperature of $\leq 50$ °C,

P2) subjecting at least a part of the aqueous feed liquid comprising one or more precipitated metal compounds from step P1) to filtration through at least one filter medium (30) (preferably through at least one ultrafiltration and/or microfiltration filter medium, more preferably through at least one ultrafiltration filter medium) comprising one or more membrane filter elements (31) to receive a retentate and a permeate,

P3) subjecting at least a part of the retentate from step P2) and/or at least a part of the aqueous feed liquid comprising one or more precipitated metal compounds from step P1) to concentration of the one or more precipitated metal compounds (preferably comprising sedimentation of the one or more precipitated metal compounds) to receive a concentrated precipitate (preferably comprising a sediment) and a metal-depleted aqueous liquid (preferably comprising a supernatant)
and

P4) withdrawing at least a part of the permeate from step P2), preferably as a first product of the process.

The invention as well as preferred embodiments and preferred combinations of parameters, properties and elements thereof are defined in the appended claims. Preferred aspects, details, modifications and advantages of the present invention are also defined and explained in the following description and in the examples stated below.

It is particularly surprising that by the process of the present invention it is possible to achieve a significantly reduced amount of one or more metal compounds in an aqueous liquid comprising an amount of one or more metal compounds and that it is possible to retrieve a significant portion of metal compounds from an aqueous liquid comprising an amount of one or more metal compounds. An additional advantage therefore results from the higher concentration of concentrated precipitate that can be obtained from the process of the present invention when compared to conventional processes of the prior art, which makes a particularly high amount of valuable metals available for recycling and further use. It is also surprising that it is possible with the process of the present invention to significantly reduce occurrences of undesirable release of one or more metal compounds into the environment, e.g. when compared with conventional respective methods of treating aqueous liquids comprising an amount of one or more metal compounds like common stand-alone sedimentation technologies. Moreover, the process of the present invention requires a lower degree of automation and control when compared with e.g. a conventional crossflow ultrafiltration process. Thus, the process of the present invention is more reliable than conventional respective methods known from the prior art. In addition, the process according to the present invention is particularly cost-effective as it does e.g. consume less energy and require less technical equipment than conventional respective known methods, e.g. it does not require larger circulation pumps.

In step P1) of the process according to the present invention as defined above, the pH of the provided or prepared feed liquid comprising one or more precipitated metal compounds is adjusted in the range of from $\geq 4$ to $\leq 13$, preferably in order to precipitate metal compounds, preferably as metal hydroxides, which can be precipitated at a pH value falling into the range as defined above. A particular advantage of the process of the present invention is that it can be adjusted to the type of metals whose amount shall be reduced in the aqueous liquid and/or which shall be retrieved from the aqueous liquid:

If, for example the one or more metal compounds whose amount shall be reduced in the aqueous liquid and/or which shall be retrieved from the aqueous liquid are or comprise heavy metal compounds and/or transition metal compounds which form water-insoluble hydroxides (or only slightly water-soluble hydroxides) at higher pH values, preferably metal compounds selected from the group consisting of nickel compounds, cobalt compounds and manganese compounds, the pH in step P1) of the process is preferably adjusted to a value in the range of from $\geq 9$ to $\leq 13$. In this preferred variant, a process of the present invention is particularly preferred, comprising a step P1) as defined here below:

P1) providing an aqueous feed liquid comprising one or more precipitated metal compounds which has a pH in the range of from $\geq 9$ to $\leq 13$, preferably of from $\geq 9$ to $\leq 12$, more preferably of from $\geq 10$ to $\leq 11$, and/or (preferably "and") a temperature of $\leq 50$ °C
and/or

preparing an aqueous feed liquid comprising one or more precipitated metal compounds from an aqueous liquid comprising metal ions, comprising adjusting in the aqueous liquid comprising metal ions a pH in the range of from $\geq 9$ to $\leq 13$, preferably of from $\geq 9$ to $\leq 12$, more preferably of from $\geq 10$ to $\leq 11$, and/or (preferably "and") a temperature of $\leq 50$ °C.

If, on the other hand, the one or more metal compounds whose amount shall be reduced in the aqueous liquid and/or which shall be retrieved from the aqueous liquid are or comprise metal compounds which form water-insoluble hydroxides (or only slightly water-soluble hydroxides) at lower pH values, e.g. amphoteric metal hydroxides, preferably metal compounds selected from the group consisting of aluminium compounds and zinc compounds, the pH in step P1) of the process is preferably adjusted to a value in the range of from $\geq 4$ to $\leq 9$. In this variant, a process of the present invention is preferred, comprising a step P1) of the process of the present invention as defined here below:

P1) providing an aqueous feed liquid comprising one or more precipitated metal compounds which has a pH in the range of from $\geq 4$ to $\leq 9$, preferably of from $\geq 5$ to $\leq 9$, more preferably of from $\geq 5$ to $\leq 8$, and/or (preferably "and") a temperature of $\leq 50$ °C

and/or

preparing an aqueous feed liquid comprising one or more precipitated metal compounds from an aqueous liquid comprising metal ions, comprising adjusting in the aqueous liquid comprising metal ions a pH in the range of from $\geq 4$ to $\leq 9$, preferably of from $\geq 5$ to $\leq 9$, more preferably of from $\geq 5$ to $\leq 8$, and/or (preferably "and") a temperature of $\leq 50$ °C.

Thus, a process according to the invention as defined herein (or a process according to the invention as described herein as being preferred) is preferred, comprising a step P1) as defined here below:

P1) providing an aqueous feed liquid comprising one or more precipitated metal compounds which has:

- a pH in the range of from $\geq 4$ to $\leq 9$, preferably of from $\geq 5$ to $\leq 9$, more preferably of from $\geq 5$ to $\leq 8$, and/or (preferably "and") a temperature of $\leq 50$ °C,
  or

- a pH in the range of from $\geq 9$ to $\leq 13$, preferably of from $\geq 9$ to $\leq 12$, more preferably of from $\geq 10$ to $\leq 11$, and/or (preferably "and") a temperature of $\leq 50$ °C,

and/or

preparing an aqueous feed liquid comprising one or more precipitated metal compounds from an aqueous liquid comprising metal ions, comprising adjusting in the aqueous liquid comprising metal ions:

- a pH in the range of from $\geq 4$ to $\leq 9$, preferably of from $\geq 5$ to $\leq 9$, more preferably of from $\geq 5$ to $\leq 8$, and/or a temperature of $\leq 50$ °C
  or

- a pH in the range of from $\geq 9$ to $\leq 13$, preferably of from $\geq 9$ to $\leq 12$, more preferably of from $\geq 10$ to $\leq 11$, and/or a temperature of $\leq 50$ °C.

In step P1) of the process according to the present invention as defined above (i.e. in all variants of step P1) as defined above), the temperature of the provided or prepared feed liquid comprising one or more precipitated metal compounds is preferably adjusted to a temperature in the range of from $\geq 15$ °C to $\leq 45$ °C, more preferably in the range of from $\geq 18$ °C to $\leq 40$ °C. Although higher temperatures are tolerated with the process of the present invention, at least for not too extended time periods, it is advantageous for uniform optimal process performance and/or for long-term stability (in particular long-term membrane stability) and preservation of functionality of the membrane filter elements used, to operate the process in the preferred temperature ranges as defined above.

In variants of the process of the present invention wherein step P1) comprises adjusting in the aqueous liquid comprising metal ions a pH in the range of from $\geq 9$ to $\leq 13$ and subsequently a pH in the range of from $\geq 4$ to $\leq 9$ (or *vice versa*) and where both different pH ranges shall be applied in the process, conditions will usually be applied ensuring that e.g. metal compounds which have been precipitated by adjusting in the aqueous liquid comprising metal ions a higher pH value (e.g. hydroxides of nickel or cobalt) will not be redissolved when subsequently adjusting in the aqueous liquid comprising metal ions a lower pH value. For example, a respective process can be performed as a two-step process wherein in a first step a pH in the range of from $\geq 9$ to $\leq 13$ is adjusted in the aqueous liquid comprising metal ions (and/or in the respective aqueous feed liquid and/or in the respective retentate and/or in the respective concentrated precipitate and/or in the respective metal-depleted aqueous liquid, as applicable) for precipitating e.g. hydroxides of nickel and cobalt and wherein in a second step a pH in the range of from $\geq 4$ to $\leq 9$ is adjusted in the aqueous liquid comprising metal ions (and/or in the respective aqueous feed liquid and/or in the respective retentate and/or in the respective concentrated precipitate and/or in the respective metal-depleted aqueous liquid and/or in the respective permeate from the first step, as applicable) for precipitating e.g. hydroxides of aluminium and/or zinc. Those skilled in the art will be aware of the conditions to be applied for running the process of the present invention in the best possible manner under the circumstances required.

The temperature and/or pH values as defined above for the aqueous feed liquid comprising one or more metal compounds prepared or provided in step P1) of the process according to the invention are usually only adjusted or provided in step P1) and monitoring, maintaining and/or re-adjusting the temperature and pH values in the subsequent steps of the process according to the invention is usually not required for satisfactory performance of the process, although it may be beneficial for optimized process performance. The temperature can be adjusted or controlled in step P1) as necessary for the purposes of the present invention by providing a suitable device, preferably a heat exchanger, positioned at a suitable point of the process, e.g. at the inlet (10) as explained below, for adjusting the temperature of the aqueous feed liquid comprising one or more precipitated metal compounds or for adjusting the temperature to produce or provide an aqueous feed liquid comprising one or more precipitated metal compounds for use in the process of the present invention. The pH can be adjusted or controlled in step P1) as necessary for the purposes of the present invention by providing a suitable device, preferably a stirred-tank reactor with equipment for pH adjustment, positioned at a suitable point of the process, e.g. the inlet (10) as explained below, for adjusting the pH of the aqueous feed liquid comprising one or more precipitated metal compounds or for adjusting the pH to produce or provide an aqueous feed liquid comprising one or more precipitated metal compounds for use in the process of the present invention.

In step P2) of the process according to the present invention as defined above, at least a part of the aqueous feed liquid comprising one or more precipitated metal compounds from step P1) is subjected to filtration through at least one filter medium comprising one or more membrane filter elements. The term "filter medium" preferably means in the context of the present invention an "ultrafiltration and/or microfiltration filter medium" and more preferably means an "ultrafiltration filter medium".

An "ultrafiltration" in the context of the present invention preferably comprises a filtration wherein at least the majority of particles (preferably $\geq$ 90 %, more preferably $\geq$ 99 %, of the particles) of a particle size of $\geq$ 10 nm, preferably of a particle size of $\geq$ 20 nm, more preferably in the range of from $\geq$ 20 nm to < 100 nm, are withheld by the ultrafiltration filter medium and will be found in the retentate from the ultrafiltration.

A "microfiltration" in the context of the present invention preferably comprises (consistent with the usual meaning in the field) a filtration wherein at least the majority of particles (preferably $\geq$ 90 % of the particles) of a particle size of $\geq$ 100 nm, preferably of a particle size in the range of from $\geq$ 100 nm to $\leq$ 50 $\mu$m, are withheld by the microfiltration filter medium and will be found in the retentate from the microfiltration.

An "ultrafiltration and/or microfiltration filter medium" in the context of the present invention preferably means a filter medium which is suitable for performing an ultrafiltration and/or a microfiltration. Preferably, an "ultrafiltration and/or microfiltration filter medium" in the context of the present invention is suited to withhold at least the majority of particles (preferably $\geq$ 90 %, more preferably $\geq$ 99 %, of the particles) of a particle size of $\geq$ 10 nm, preferably of $\geq$ 20 nm, and/or of a particle size of $\geq$ 100 nm, with the withheld particles preferably being present in the retentate from the ultrafiltration and/or microfiltration.

An "ultrafiltration filter medium" in the context of the present invention preferably means a filter medium which is suitable for performing an ultrafiltration. Preferably, an "ultrafiltration filter medium" in the context of the present invention is suited to withhold at least the majority of particles (preferably $\geq$ 90 %, more preferably $\geq$ 99 %, of the particles) of a particle size of $\geq$ 10 nm, preferably of $\geq$ 20 nm, with the withheld particles preferably being present in the retentate from the ultrafiltration.

In the context of the present invention, the term "metal compounds" preferably means any compound comprising or representing a metal. More preferably, the meaning of the term "metal compounds" as used herein comprises metals, metal ions and metal salts. Even more preferably, the term "metal compounds" comprises the ions, salts and hydroxides of nickel, cobalt, manganese, aluminium and zinc.

In the context of the present invention, the term "precipitated metal compounds" preferably means metal compounds which are not dissolved in an aqueous liquid, in particular which are not dissolved in the aqueous feed liquid comprising one or more precipitated metal compounds, in a retentate, in a concentrated precipitate, in a supernatant and/or in an aqueous phase comprising one or more precipitated metal compounds (all as further specified and defined in this text). Precipitated metal compounds preferably comprise metals, preferably as metal ions. Preferred species of precipitated metal compounds in the context of the present invention are precipitated metal hydroxides, preferably comprising nickel hydroxide, cobalt hydroxide and manganese hydroxide. Depending on the concrete process conditions chosen, in particular depending on the pH chosen for performing the process of the present invention (see above for details), other preferred species of precipitated metal compounds in the context of the present invention comprise aluminium hydroxide and zinc hydroxide. Preferably, the term "precipitated metal compounds" as used in the context of the present invention comprises metal compounds which are present in an aqueous liquid or aqueous phase as precipitated solid particles, as suspended particles (e.g. in the form of a slurry), as disperse phase and/or as colloidal disperse phase.

In the context of the present invention, the term "retrieving one or more metal compounds from an aqueous liquid comprising an amount of one or more metal compounds" preferably means (consistent with the usual meaning) that one or more metal compounds which were present in an aqueous liquid comprising an amount of one or more metal compounds are recovered or recycled from the aqueous liquid comprising an amount of one or more metal compounds so that they are in principle available for further use, e.g. for further industrial use, and are not released into the environment.

In the context of the present invention, the at least one filter medium (30) preferably comprises or is at least one membrane filter module.

In a preferred variant of the process of the present invention as defined here above (in particularly when the process is run within the preferred ranges pf pH and temperature, as defined above), the permeate from step P2) which can be withdrawn from the process (see step P4)) comprises

- an amount of < 1 mg/kg permeate, preferably of ≤ 0.2 mg/kg permeate and more preferably of ≤ 0.15 mg/kg permeate of nickel ions,
  and/or

- an amount of < 1 mg/kg permeate, preferably of ≤ 0.2 mg/kg permeate and more preferably of ≤ 0.15 mg/kg permeate of cobalt ions,
  and/or

- an amount of < 1 mg/kg permeate, preferably of ≤ 0.2 mg/kg permeate and more preferably of ≤ 0.15 mg/kg permeate of manganese ions,

wherein preferably the aqueous liquid comprising an amount of one or more metal compounds and/or the aqueous feed liquid comprising one or more precipitated metal compounds which were used to produce said permeate from step P2) had (each) comprised an amount of nickel ions and/or of cobalt ions and/or of manganese ions, respectively, in the range of from 1 g/kg aqueous liquid (or aqueous feed liquid comprising one or more precipitated metal compounds, respectively) to 10 g/kg aqueous liquid (or aqueous feed liquid comprising one or more precipitated metal compounds, respectively).

In step P3) of the process according to the present invention as defined above, at least a part of the retentate from step P2) and/or at least a part of the aqueous feed liquid comprising one or more precipitated metal compounds from step P1) (and/or at least a part of the metal-depleted aqueous liquid, preferably of the supernatant, from a previous step P3), see below) are subjected to concentration of the one or more precipitated metal compounds. The term "concentration of the one or more precipitated metal compounds" in the context of the present invention preferably means a concentration by mechanical means (preferably a concentration comprising one or more methods selected from the group consisting of filtering methods, methods applying force of gravity, methods applying pressure and methods applying centrifugal force), preferably comprising one or more methods selected from the group consisting of bag filtering, band filtering, centrifugal decanting, centrifugation, dynamic membrane (crossflow) filtration, dynamic sieve filtration, filter pressing, sedimentation and vacuum filtering. Concentration comprising sedimentation and resulting in a sediment as concentrated precipitate received in step P3) is a preferred method according to the process of the present invention.

The metal-depleted aqueous liquid received in step P3) is an aqueous liquid which is depleted in one or more precipitated metal compounds due to the subjecting to concentration of a retentate from step P2) and/or of at least a part of the aqueous feed liquid comprising one or more precipitated metal compounds from step P1) and/or optionally of at least a part of the metal-depleted aqueous liquid, preferably of the supernatant, from a previous step P3). The metal-depleted aqueous liquid received in step P3) therefore generally comprises a lower amount of the one or more precipitated metal compounds than the respective (combined) aqueous starting liquid(s) from which it resulted (as explained above: in particular from the aqueous feed liquid from a step P1), from the retentate from a step P2), from a metal-depleted aqueous liquid from a previous step P3) and/or from an aqueous phase comprising one or more precipitated metal compounds as defined below). In the preferred variant where the concentration in step P3) comprises sedimentation, the metal-depleted aqueous liquid received in step P3) is or comprises a supernatant.

It has been found in own experiments, that the one or more precipitated metal compounds can preferably be concentrated by the method or methods of step P3) (or of a step P3)) to a concentration in the range of from about 5 mass-% to about 10 mass-%, relative to the total mass of the aqueous liquid or aqueous phase (see below) comprising the one or more precipitated metal compounds.

In step P4) of the process according to the present invention as defined above, at least a part of the permeate from step P2) (or from a step P2)) is withdrawn from the process, preferably as a first product of the process. The permeate withdrawn from the process in step P4) and separated, corresponds to an aqueous liquid comprising a reduced amount of one or more metal compounds in the sense of the present invention. It has been found in own experiments that a permeate withdrawn in step P4) from the process is sufficiently depleted in one or more metal compounds to be released into the environment so that it can be assumed it will not cause hazard or environmental risk to plant or animal life.

A process according to the invention as defined herein (or a process according to the invention as described herein as being preferred) is preferred, further comprising the steps:

P5) subjecting at least a part of the metal-depleted aqueous liquid (preferably of the supernatant) from step P3) (or from a step P3))

and preferably

at least a part of the aqueous feed liquid comprising one or more precipitated metal compounds from step P1) and/or at least a part of the retentate from step P2),

to filtration through at least one filter medium comprising one or more membrane filter elements, preferably in a further step P2), to receive a retentate or a further retentate and a permeate or a further permeate.
and/or

P6) withdrawing at least a part of the concentrated precipitate from step P3), preferably as a second process product; and/or

P7) backwashing the at least one filter medium (30) and/or the one or more membrane filter elements (31), preferably comprising flushing or purging the at least one filter medium and/or the one or more membrane filter elements with a stream of a liquid, preferably water, flowing in the opposite (or reverse) direction of the permeate stream through the at least one filter medium and/or the one or more membrane filter elements.

The process according to the present invention as defined above can be performed in a variety of operation modes, e.g. in one or more (including a combination of, as applicable) operation modes selected from the group consisting of continuous mode, semi-batch mode, batch mode and circulation mode.

In a particularly preferred variant of the present invention, the process according to the invention as defined above or below is performed as continuous process or in continuous mode. It is further preferred according to the present invention if the process according to the present invention comprises at least the steps P1), P2), P3), P4) and P5) and at least the steps P2), P3) and P5) are performed as or participate in a circulatory process. Preferred is also a variant of the process of the present invention as defined above or below where the process is performed as continuous process or in continuous mode and where at least the steps P2), P3) and P5) are performed as or participate in a circulatory process, as explained here before.

One specific advantage of performing the process of the present invention as a circulatory process is that due to such cyclic operation a certain crossflow is preferably generated perpendicular to the one or more membrane filter elements, contributing to the prevention of fouling and/or clogging of the one or more membrane filter elements of the filter medium, in particular, if - at the same time - the process liquid (as defined below) is additionally drawn from the process environment, in particular from flow tank (20) through outlet (22), in a way that a flow of the process liquid is created, thus passing the one or more membrane filter elements.

Since the process according to the present invention is preferably performed as continuous process or in continuous mode and/or the process steps are preferably performed as or participate in a circulatory process, generally more than one step P1), P2), P3), P4), P5), P6) and/or P7) can and preferably will occur or will be performed in the course of performing the process. Thus reference to "a step P1)" (or to any other step of the process according to the present invention as "a step") shall be understood to mean that any such step may be gone through more often than one time and that the term "a step" (e.g. "a step P1)") refers to any such step (e.g. to any step P1)). And similarly, reference in this text to "step P1)" (or to any other step of the process of the present invention as defined herein) shall be understood to mean "a step P1)", as will be understood by those skilled in the art from the context or the circumstances as disclosed and explained in this text.

Similarly, reference to "a further retentate", "a further permeate", "a further concentrated precipitate", a "metal-depleted aqueous liquid" or "a further supernatant" in this text in each case refers to the situation that the process according to the present invention is preferably performed as continuous process or in continuous mode and/or the process steps are performed as or participate in a circulatory process. Therefore, the terms previously cited in this paragraph shall be understood to mean that a new or further retentate, a new or further permeate, a new or further concentrated precipitate and/or a new or further metal-depleted aqueous liquid (preferably a supernatant) may occur at every individual cycle of the process according to the present invention when being performed as circulatory process and that an expression "a further retentate" (and similarly applying to the expressions "permeate", "concentrated precipitate", "metal-depleted aqueous liquid" and/or "supernatant" as explained in this paragraph) shall therefore be understood to mean any such retentate (similarly applying to the other expressions as explained in this paragraph) of a circulatory process.

Once the process of the present invention has, in step P3) (or in a step P3)), run through concentration of the one or more precipitated metal compounds, a concentrated precipitate and a metal-depleted aqueous liquid (preferably a supernatant) are created. In particular, where the process of the present invention is being performed as a continuous and/or circulatory process, the metal-depleted aqueous liquid (preferably the supernatant) from step P3) is preferably combined in step P5) with at least a part of the aqueous feed liquid comprising one or more precipitated metal compounds from (a) step P1) that is, preferably continuously, being added to the process of the present invention and with at least a part of the retentate from (a) step P2) that is continuously being produced in the process. The combined liquids (i) metal-depleted aqueous liquid (preferably supernatant) from step P3), (ii) at least a part of the aqueous feed liquid comprising one or more precipitated metal compounds from (a) step P1) and (iii) at least a part of the retentate from (a) step P2) are then preferably subjected to filtration through the at least one filter medium, preferably to receive a further retentate and a further permeate.

In step P6) of the process according to the present invention as defined above, at least a part of the concentrated precipitate from (a) step P3) (or from a step P3)) is withdrawn from the process, preferably as a second product of the process. The concentrated precipitate withdrawn (and preferably separated) from the process in step P6) corresponds to one or more metal compounds retrieved from an aqueous liquid comprising an amount of one or more metal compounds in the sense of the present invention.

In (optional) step P7) of the process according to the present invention as defined above, the at least one filter medium and/or the one or more membrane filter elements can be backwashed as is known in the field in case such operation is necessary or beneficial, e.g. because the at least one filter medium and/or the one or more membrane filter elements need to be freed from any contaminants which would impede their performance. For this purpose, the process of the present invention for producing an aqueous liquid comprising a reduced amount of one or more metal compounds from an aqueous liquid comprising an amount of one or more metal compounds and/or for retrieving one or more metal compounds from an aqueous liquid comprising an amount of one or more metal compounds will usually be paused while the optional step P7) of backwashing is performed, and the process of the present invention for producing an aqueous liquid comprising a reduced amount of one or more metal compounds from an aqueous liquid comprising an amount of one or more metal compounds and/or for retrieving one or more metal compounds from an aqueous liquid comprising an amount of one or more metal compounds will be continued once the backwashing is completed.

Following from the above, a process according to the invention as defined herein (or a process according to the invention as described herein as being preferred) is also preferred wherein the process

- is performed as continuous process or is performed in continuous mode,
and/or

- comprises at least the steps P1), P2), P3), P4) and P5) and at least the steps P2), P3) and P5) are performed as or participate in a circulatory process.

In addition, a process according to the invention as defined herein (or a process according to the invention as described herein as being preferred) is also preferred wherein the process

- is performed as batch process or is performed in batch mode,
and/or

- comprises at least the steps P1), P2), P3), P4) and P5) and at least the steps P2), P3) and P5) are performed as or participate in a circulatory process.

In the above variant of the process wherein the process is performed as batch process or is performed in batch mode, the retentate from a step P2) is subjected to concentration of the one or more precipitated metal compounds in a step P3) and the metal-depleted aqueous liquid from said step P3) is subjected to filtration through at least one filter medium comprising one or more membrane filter elements in a step P5 (or a further step P2), respectively).

Furthermore, a process according to the invention as defined herein (or a process according to the invention as described herein as being preferred) is preferred, wherein step P3) (or a step P3))

- comprises subjecting at least a part of the retentate from step P2) and/or (preferably "and") at least a part of the aqueous feed liquid comprising one or more precipitated metal compounds from step P1) (or of a step P1)) and/or (preferably "and") at least a part of the metal-depleted aqueous liquid (preferably the supernatant) from a previous step P3) to concentration, preferably to receive a concentrated precipitate or a further concentrated precipitate and a metal-depleted aqueous liquid (preferably a supernatant) or a further metal-depleted aqueous liquid (preferably a further supernatant),
and/or

- further comprises subjecting at least a part of the metal-depleted aqueous liquid (preferably of the supernatant) from a previous step P3) to concentration, preferably to receive a concentrated precipitate or a further concentrated precipitate and a metal-depleted aqueous liquid (preferably a supernatant) or a further metal-depleted aqueous liquid (preferably a further supernatant).

This process variant (as described here above) preferably applies to a process of the present invention which is performed as continuous process or is performed in continuous mode and/or which is performed as circulatory process (e.g. a batch process performed in circulatory mode).

When in step P3), the process of the present invention as defined above (or in a step P3)) has run through concentration of the one or more precipitated metal compounds, a concentrated precipitate and a metal-depleted aqueous liquid (preferably a supernatant) are (ore were) created. In particular, where the process of the present invention is being performed as a continuous and/or circulatory process, the metal-depleted aqueous liquid (preferably the supernatant) created in a step P3) (or which has been created in a previous step P3)) is preferably combined in a (subsequent) step P3)) with at least a part of the aqueous feed liquid comprising one or more precipitated metal compounds from (a) step P1) that is, preferably continuously, being added to the process of the present invention and with at least a part of the retentate from (a) step P2) that is continuously being produced in the process of the present invention. The combined liquids (i) metal-depleted aqueous liquid (preferably supernatant) from (a previous) step P3), (ii) at least a part of the aqueous feed liquid comprising one or more precipitated metal compounds from (a) step P1) and (iii) at least a part of the retentate from (a) step P2) are then preferably subjected to concentration, preferably to receive a further concentrated precipitate and a further metal-depleted aqueous liquid (supernatant).

A process according to the invention as defined herein (or a process according to the invention as described herein as being preferred) is also preferred, wherein the one or more membrane filter elements (31) of the at least one filter medium comprising one or more membrane filter elements are selected from the group consisting of

- one or more ceramic flat sheet membrane filter elements,

- one or more polymeric flat sheet membrane filter elements, preferably one or more polymeric flat sheet membrane laminate filter elements,

- one or more polymeric capillary membrane filter elements
  and

- combinations of the foregoing membrane filter elements,

wherein more preferably the at least one filter medium is or comprises one or more polymeric flat sheet membrane filter elements, yet more preferably one or more polymeric flat sheet membrane laminate filter elements and yet even more preferably one or more hollow polymeric flat sheet membrane laminate filter elements.

Filter media comprising one or more membrane filter elements as defined here above are known in the field, e.g. as "Membrane Bio-Reactors" ("MBRs") and are commercially available from several suppliers, e.g. from Microdyn-Nadir, Ovivo, Meidensha Corporation, Nanjing Tangent Fluid Technology Co. Ltd., Pentair, X-Flow; Suez Water Technologies and Solutions, Kubota Membranes, Koch Membranen or Synder Filtration. A particularly preferred filter medium comprising one or more membrane filter elements for use in the process of the present invention is the Microdyn Nadir® Bio-CEL® membrane module, comprising a plurality of hollow polymeric flat-sheet membrane laminate filter elements. Particularly preferred for the purpose of the process according to the present invention as one or more membrane filter elements (31) of the at least one filter medium are the hollow polymeric flat sheet membrane laminate filter elements "NADIR® UH050P" and "NADIR® UP150P" (both by Microdyn Nadir). Even more preferred for the purpose of the process according to the present invention is the hollow polymeric flat sheet membrane laminate filter element "NADIR® UP150P".

Also preferred is a process according to the invention as defined herein (or a process according to the invention as described herein as being preferred) wherein the concentration of the one or more precipitated metal compounds in step P3) (or in a step P3)) is performed by or comprises at least one method selected from the group consisting of

- bag filtering,

- band filtering,

- centrifugal decanting,

- centrifugation,

- dynamic membrane filtration, preferably dynamic membrane crossflow filtration;

- dynamic sieve filtration,

- filter pressing,

- sedimentation,

- vacuum filtering
  and

- combinations of the foregoing methods,

wherein preferably the concentration of the one or more precipitated metal compounds is achieved by or comprises sedimentation and/or the concentrated precipitate received in step P3) is a sediment. For the purposes of the present invention, it is preferred to perform the or a sedimentation in a lamella separator.

In the context of the present invention, the term "supernatant" as a preferred variant of a metal-depleted aqueous liquid (as defined above) preferably means the resulting aqueous liquid which is received from a step P3), where one or more of the preferred methods for the concentration of the one or more precipitated metal compounds selected from the group consisting of centrifugal decanting, centrifugation, sedimentation and combinations thereof, as defined here above, have been applied. A supernatant (as a metal-depleted aqueous liquid) according to this preferred meaning in the context of the present invention generally comprises a lower amount of the one or more precipitated metal compounds than the respective aqueous starting liquid from which it was produced (in particular from the aqueous feed liquid from a step P1), from the retentate from a step P2), from the metal-depleted aqueous liquid, preferably the supernatant, from a step P3) and/or from the aqueous phase comprising one or more precipitated metal compounds as defined below). Accordingly, other separation methods, like e.g. flotation, preferably do not result in a "supernatant" according to the preferred meaning of this term in the context of the present invention.

Also preferred is a process according to the invention as defined herein (or a process according to the invention as described herein as being preferred) wherein

- the process is performed at a transmembrane pressure of the one or more membrane filter elements (31) of the at least one filter medium (30) in the range of from 10 to 800 hPa, preferably of from 50 to 600 hPa, more preferably of from 100 to 400 hPa,
  and/or

- at least a part of the filtration through the at least one filter medium comprising one or more membrane filter elements in step P2) is performed as crossflow filtration, preferably with a flow direction perpendicular to the one or more membrane filter elements of the at least one filter medium.

The transmembrane pressure of the one or more membrane filter elements is preferably determined in the context of the present invention (consistent with the usual practice in the field) as the (mathematical) difference of the pressure in the process liquid (as defined below) minus the pressure in the permeate.

Where at least a part of the filtration through the at least one filter medium comprising one or more membrane filter elements in step P2) of the process of the present invention is performed as crossflow filtration, the crossflow can be induced or enhanced in a first variant by the feeding of at least a part of the metal-depleted aqueous liquid (preferably the supernatant) from a step P3) into a step P2), preferably by feeding at least a part of the metal-depleted aqueous liquid (preferably of the supernatant) from a step P3) into a flow tank (20) comprising the or an aqueous phase comprising one or more precipitated metal compounds and the or at least one submerged membrane filter module (30), submerged under the surface (23) of said aqueous phase, at a position below the surface of said aqueous phase (23) and above the upper end of the at least one submerged membrane filter module (30), so that crossflow conditions are generated or enhanced at at least a part of the one or more membrane filter elements of the submerged membrane filter module (30), preferably with a flow direction perpendicular to the one or more membrane filter elements (31) of the at least one filter medium. The crossflow conditions of this first variant can e.g. be or are further enhanced or facilitated if a stream of the process liquid (as defined below), passing at least a part of the one or more membrane filter elements of the submerged membrane filter module (30), is released from the flow tank (20) through outlet (22).

In a second variant, crossflow conditions can be induced or enhanced by periodically applying compressed air flushes to the bottom of the one or more membrane filter elements (31), thus generating a crossflow of air flushes to the top of said membrane filter elements.

The crossflow induced or enhanced by the first variant and by the second variant (as defined here above) can be applied as single measures or they can be applied in combination. When applying crossflow conditions, it is preferred to avoid foaming in order not to impede the process of the present invention.

Furthermore, a process according to the invention as defined herein (or a process according to the invention as described herein as being preferred) is preferred wherein at least a part of the one or more membrane filter elements (31), preferably all of the one or more membrane filter elements (31), of the at least one filter medium (30)

- has (or have) a nominal molecular weight cut-off of ≥ 45,000 Da, preferably of ≥ 50,000 Da, more preferably of ≥ 75,000 Da, yet more preferably of ≥ 100,000 Da and even yet more preferably of ≥ 125,000 Da; and/or

- has a pure water flux permeability at 38 to 42 °C and at a transmembrane pressure of 100 hPa of ≥ 90, preferably in the range of from 90 to 110, kg $*$ m$^{-2}$ $*$ h$^{-1}$ / 100 kPa, and/or

- has a nominal pore size of < 100 nm, preferably of ≤ 75 nm and more preferably of ≤ 50 nm, and/or

- comprise an organic polymer, preferably selected from the group consisting of polyethersulfone (including hydrophilic polyethersulfone), polysulfone, polyvinylidenefluoride, polypropylene and mixtures thereof, wherein preferably the organic polymer is or comprises polyethersulfone (including hydrophilic polyethersulfone).

Preferred is also a process according to the invention as defined herein (or a process according to the invention as described herein as being preferred) wherein at least a part of the one or more membrane filter elements (31), preferably all of the one or more membrane filter elements (31), of the at least one filter medium (30)

- has (or have) a nominal molecular weight cut-off in the range of from ≥ 45,000 to ≤ 200,000 Da, preferably of from of ≥ 125,000 Da to ≤ 175,000 Da.

The "nominal molecular weight cut-off" ("NMWCO") of a membrane as specified here above is a method of characterization generally known and used in in the field of filtration technology to describe pore size distribution and retention capabilities of membranes. In the context of the present invention (and consistent with the usual practice in the field) the nominal molecular weight cut-off is preferably determined as the lowest molecular weight (in Daltons) at which > 90% of a solute with a known molecular weight (as defined) is retained by the membrane.
A process according to the invention as defined herein (or a process according to the invention as described herein as being preferred) is also preferred wherein:

- (first variant) two or all three of the options selected from the group consisting of

  - at least a part of the aqueous feed liquid comprising one or more precipitated metal compounds from a step P1),

  - at least a part of the retentate from a step P2) and

  - at least a part of the metal-depleted aqueous liquid (preferably of the supernatant) from a step P3),

  are fed to or combined to result in an aqueous phase comprising one or more precipitated metal compounds, and/or

- (second variant) at least a part of the aqueous feed liquid comprising one or more precipitated metal compounds from the and/or from a step P1) and/or at least a part of the retentate from the and/or from a step P2) and/or at least a part of the metal-depleted aqueous liquid (preferably of the supernatant) from the and/or from a step P3) is (or are, respectively) fed to or combined to result in an aqueous phase comprising one or more precipitated metal compounds, wherein preferably (in each of the above-stated two variants, "first variant" and "second variant")

  - at least a part of said aqueous phase comprising one or more precipitated metal compounds is subjected to filtration through at least one filter medium (30) comprising one or more membrane filter elements (31), preferably in a further step P2), preferably to receive a retentate or a further retentate and a permeate or a further permeate, and/or

- at least a part of said aqueous phase comprising one or more precipitated metal compounds is subjected to concentration, preferably in a further step P3), preferably to receive a concentrated precipitate or a further concentrated precipitate and a metal-depleted aqueous liquid (preferably a supernatant) or a further metal-depleted aqueous liquid (preferably a further supernatant).

Moreover, a process according to the invention as defined herein (or a process according to the invention as described herein as being preferred) is also preferred wherein

- the at least one filter medium (30) comprising one or more membrane filter elements (31) is comprised by, comprised in, or is, at least one submerged membrane filter module,
  and/or

- the at least one submerged membrane filter module (30) is arranged in or situated in a flow tank (20),
  wherein preferably the flow tank (20) comprises the aqueous phase comprising one or more precipitated metal compounds and the at least one submerged membrane filter module (30) is submerged under the surface (23) of and is at least partly covered (and preferably is fully covered) by said aqueous phase,

  and/or

- step P1) comprises providing the aqueous feed liquid comprising one or more precipitated metal compounds to the or a flow tank (20), preferably comprising the or an aqueous phase comprising one or more precipitated metal compounds and the or at least one submerged membrane filter module (30), submerged under the surface (23) of said aqueous phase,

  preferably at a position below the surface of said aqueous phase (23) comprising one or more precipitated metal compounds and above the upper end of the at least one submerged membrane filter module (30),

  preferably so that crossflow conditions are generated or enhanced at at least a part of the one or more membrane filter elements of the submerged membrane filter module (30), preferably with a flow direction perpendicular to the one or more membrane filter elements (31) of the at least one filter medium.

  As explained above, crossflow conditions (in this variant) can be or are further enhanced or facilitated if a stream of the process liquid (as defined below) is released from the flow tank (20) through outlet (22), passing at least a part of the one or more membrane filter elements of the submerged membrane filter module (30).

A process according to the invention as defined herein (or a process according to the invention as described herein as being preferred) is also preferred wherein:

- the precipitated metal compounds present:

  - in the feed liquid comprising one or more precipitated metal compounds in
    step P1) and/or in a step P1)
    and/or

  - in the retentate in step P2) and/or in a step P2)
    and/or

  - in the metal-depleted aqueous liquid (preferably in the supernatant) in step P3) and/or in a step P3),
    and/or

  - in the aqueous phase comprising one or more precipitated metal compounds,

  comprise one or more metal compounds selected from the group consisting of nickel compounds, cobalt compounds, manganese compounds and mixtures thereof and/or one or more metal compounds selected from the group consisting of aluminium compounds and zinc compounds, and/or

- step P3) comprises applying to at least a part of the permeate from step P2) and/or from a step P2) a reduced pressure, more preferably a pressure in the range of from 10 to 750 hPa, preferably of from 50 to 500 hPa, more preferably of from 100 to 400 hPa,
and/or

- wherein the process (preferably a process according to the invention as described herein as being preferred) is conducted so as to adjust or maintain the amount or concentration of the one or more precipitated metal compounds present in the aqueous phase comprising one or more precipitated metal compounds in the range of from 1 to 10 mass-%, relative to the total mass of the aqueous phase comprising one or more precipitated metal compounds, and/or

- the process comprises operating at a permeate flux in the range of from 20 to 200 $kg/m^2/h^{-1}$, preferably of from 50 to 175 $kg * m^{-2} * h^{-1}$, and more preferably of from 70 to 150 $kg * m^{-2} * h^{-1}$.

As explained above, the nature or kind of precipitated metal compounds present at a certain point in time in a feed liquid comprising one or more precipitated metal compounds, in a retentate, in a supernatant and/or in an aqueous phase comprising one or more precipitated metal compounds depends on the pH of the respective medium.

In a preferred variant of the process according to the present invention as defined herein it is therefore possible to

- first reduce the amount of one or more metal compounds in the aqueous liquid and/or to retrieve one or more metal compounds from the aqueous liquid where the one or more metal compounds are or comprise heavy metal compounds and/or transition metal compounds which form water-insoluble hydroxides (or only slightly water-soluble hydroxides) at higher pH values, preferably metal compounds selected from the group consisting of nickel compounds, cobalt compounds and manganese compounds, by adjusting the pH in step P1) of the process to a value in the range of from ≥ 9 to ≤ 13 , preferably of from ≥ 9 to ≤ 12, more preferably of from ≥ 10 to ≤ 11, and to

- subsequently (either in a continuous process or in a two-step process, preferably in a separate second step of a two-step process, see above) reduce the amount of one or more metal compounds in the aqueous liquid and/or to retrieve one or more metal compounds from the aqueous liquid where the one or more metal compounds are or comprise metal compounds which form water-insoluble hydroxides (or only slightly water-soluble hydroxides) at lower pH values, e.g. amphoteric metal hydroxides, preferably metal compounds selected from the group consisting of aluminium compounds and zinc compounds, by adjusting the pH in step P1) of the process to a value in the range of from ≥ 4 to ≤ 9, preferably of from ≥ 5 to ≤ 9, more preferably of from ≥ 5 to ≤ 8,

or *vice versa.*

In the variant of the process according to the present invention wherein the process is conducted so as to adjust or maintain the amount or concentration of the one or more precipitated metal compounds present in the aqueous phase comprising one or more precipitated metal compounds in the range of from 1 to 10 mass-%, relative to the total mass of the aqueous phase comprising one or more precipitated metal compounds, the amount or concentration of the one or more precipitated metal compounds present in the aqueous phase comprising one or more precipitated metal compounds is preferably determined at the outlet (22) of the flow tank (20). Preferably, for this purpose a sample of the aqueous phase comprising one or more precipitated metal compounds can be drawn at the outlet (22) and the amount or concentration of the one or more precipitated metal compounds present in said aqueous phase can then be determined (measured) by common methods known in the field.

The amount or concentration of the one or more precipitated metal compounds present in the aqueous phase comprising one or more precipitated metal compounds as specified above is preferably adjusted or controlled by varying the amount (preferably the volume) of permeate withdrawn from the process (e.g. by varying the transmembrane pressure) and/or by varying the amount (preferably the volume) of aqueous phase (or the process liquid, as defined below) comprising one or more precipitated metal compounds to be withdrawn from the process, preferably by extracting it from flow tank (20) via outlet (22) (as defined below).

The present invention also pertains to a system or apparatus (1) for use in a process for

- producing an aqueous liquid comprising a reduced amount of one or more metal compounds
  and/or
- retrieving metal compounds

from an aqueous liquid comprising an amount of one or more metal compounds, comprising at least the following components (i.e. one or more additional components may be present and preferably one or more additional components are present):

S1) at least one flow tank (20), configured to receive one or more aqueous feed liquids (as defined below) through at least one dispensing device (21) and to release at least one process liquid through at least one outlet (22),

S2) at least one membrane filter module (30), preferably at least one submerged membrane filter module, preferably comprising at least one filter medium comprising one or more membrane filter elements (31), configured to receive a process liquid and to release a permeate,
wherein the at least one membrane filter module is arranged in or situated in the at least one flow tank (20) and preferably is submerged in an aqueous phase comprising one or more precipitated metal compounds which is present in the at least one flow tank (20),
and wherein preferably the at least one membrane filter module (30) is configured for being run under crossflow conditions,

S3) at least one concentration device (40), preferably at least one sedimentation device, configured to receive at least one process liquid from the at least one flow tank (20) and preferably configured for concentrating (preferably mechanically concentrating) one or more precipitated metal compounds, and configured to release

- a concentrated precipitate, preferably a sediment, preferably through at least one outlet (41)
  and

- a metal-depleted aqueous liquid (preferably a supernatant; as defined above), preferably through outlet (42).

Generally, all aspects of the present invention discussed herein in the context of the process according to the present invention apply *mutatis mutandis* to the system or apparatus according to the present invention, as defined here above and below. And *vice versa,* all aspects of the present invention discussed herein in the context of the system or apparatus according to the invention apply *mutatis mutandis* to the process according to the present invention.
The term "aqueous feed liquid" as used in the context of the present invention comprises aqueous feed liquids which are fed or supplied to a step P1) of the process according to the present invention, preferably via dispensing device (21) into flow tank (20). Preferably, the term "aqueous feed liquid" as used in the context of the present invention comprises:

- at least a part of the (one or more) aqueous feed liquid(s) which are provided or prepared in a step P1) of the process according to the present invention (as defined above) and which is (are) preferably fed or supplied to a step P1), preferably via dispensing device (21) into flow tank (20), more preferably from aqueous effluents, preferably from industrial production,
  and/or

- at least a part of the (one or more) supernatant(s) resulting from a step P3) of the process according to the present invention (as defined above and below) which is (are) preferably fed or supplied to a step P1) of the process according to the present invention (as defined above), preferably via dispensing device (21) into flow tank (20).

The dispensing device (21) is preferably shaped or configured to allow uniform dispensing of the one or more feed liquids (preferably the entirety of the one or more feed liquids) over the one or more membrane filter elements of the membrane filter module (30) (preferably over all the membrane filter elements of the membrane filter module (30) present), preferably for enhancing performance of the process and/or crossflow conditions. For example, the dispensing device (21) may be a perforated pipe. The dispensing device (21) is preferably located above the at least one membrane filter module (30) and in a distance allowing uniform dispensing of the one or more feed liquids (preferably the entirety of the one or more feed liquids) over the one or more membrane filter elements of the membrane filter module (30).
In the context of the present invention the term "process liquid" preferably means the aqueous liquid or combination of aqueous liquids which is available in a step P2) of the process of the present invention, preferably in (the at least one) flow tank (20), for being subjected to filtration through the at least one filter medium (30) and/or which is available for being transferred to a step P3) (for being subjected to concentration of the one or more precipitated metal compounds).
More preferably, the term "process liquid" in the context of the present invention comprises:

- at least a part of the or a retentate from a step P2)
  and/or

- at least a part of the or an aqueous liquid comprising one or more precipitated metal compounds from a step P1)

and/or

- at least a part of the or a metal-depleted aqueous liquid (preferably of the or a supernatant) from a step P3) and/or

- at least a part of the aqueous phase comprising one or more precipitated metal compounds (as defined above).

For the purposes of the present invention, the concentration device (40) is preferably selected from the group consisting of bag filter, band filter, centrifugal decanter, centrifuge, dynamic membrane filter (Bokela), dynamic sieve filter (Bokela), filter press, sedimentation device, vacuum filter and combinations thereof. In a preferred variant of the system or apparatus of the present invention, the concentration device (40) is selected from the group consisting of centrifugal decanter, centrifuge, sedimentation device and combinations thereof. In a more preferred variant of the system or apparatus of the present invention, the concentration device (40) is or comprises a sedimentation device, more preferably a lamella separator.

A system or apparatus according to the invention as defined herein (or a system or apparatus according to the invention as described herein as being preferred) is preferred, further comprising the following components:

S4) one or more inlets, preferably comprising one or more pipes, (10), configured for providing an aqueous liquid comprising one or more precipitated metal compounds
via a or the at least one dispensing device (21) as feed liquid to the at least one flow tank (20),
and/or

S5) one or more pipes (11), configured for providing a supernatant from the at least one supernatant collecting device (42) and/or for providing an aqueous liquid comprising one or more precipitated metal compounds,
via a or the at least one dispensing device (21) as feed liquid to the at least one flow tank (20),
and/or

S6) one or more pipes (12), configured for connecting the at least one outlet (22) of the at least one flow tank (20) with the at least one sedimentation device (40),
wherein preferably the one or more pipes (12) comprise one or more pumps (13), preferably for pumping the at least one process liquid from the at least one flow tank (20) to the at least one concentration device (40),
and/or

S7) one or more pipes (14), configured for connecting outlet (42) of the at least one concentration device (40) with a or with the at least one dispensing device (21), preferably for providing the metal-depleted aqueous liquid (preferably the supernatant) from the at least one concentration device (40) as feed liquid to the at least one flow tank (20),
and/or

S8) one or more pipes (15), configured for withdrawing permeate from the at least one membrane filter module (30),
wherein preferably the one or more pipes (15) comprise at least one pump (16), preferably for withdrawing permeate and/or or for pumping permeate from the at least one membrane filter module (30) to the at least one buffer tank (17),
and/or

S9) at least one buffer tank (17), preferably configured for receiving permeate from the at least one membrane filter module (30) and/or for receiving washing liquid for backwashing the one or more membrane filter elements (31) of the at least one membrane filter module (30),
wherein preferably the at least one buffer tank (17) is connected with the one or more pipes (15) and/or the at least one pump (16), preferably for withdrawing or pumping permeate from the at least one membrane filter module (30) to the at least one buffer tank (17), or for pumping washing liquid from the at least one buffer tank to the at least one membrane filter module (30),
and/or

S10) at least one heat exchanger (51), preferably positioned at the inlet (10) (upstream), preferably for controlling and/or adjusting the temperature of the aqueous feed liquid comprising one or more precipitated metal compounds or for adjusting the temperature to produce or provide an aqueous feed liquid comprising one or more precipitated metal compounds for use in the process of the present invention,
and/or

S11) at least one stirred-tank reactor (52) with equipment for pH adjustment, preferably positioned at the inlet (10) (preferably upstream the at least one heat exchanger), preferably for adjusting and/or controlling the pH of the aqueous feed liquid comprising one or more precipitated metal compounds or for adjusting the pH to produce or provide an aqueous feed liquid comprising one or more precipitated metal compounds for use in the process of the present invention.

The present invention also pertains to the use of a filter medium (30) comprising one or more membrane filter elements (31),
in combination with a concentration device, preferably a sedimentation device, more preferably a lamella separator,

- for reducing the amount of metal ions in an aqueous liquid comprising metal ions and/or for retrieving metal ions from an aqueous liquid comprising metal ions
  and/or

- for reducing the amount of one or more precipitated metal compounds in an aqueous liquid comprising an amount of one or more precipitated metal compounds and/or for retrieving one or more precipitated metal compounds from an aqueous liquid comprising an amount of one or more precipitated metal compounds,

wherein preferably the aqueous liquid comprising an amount of one or more precipitated metal compounds has a pH in the range of from $\geq 4$ to $\leq 13$, more preferably in the range of from $\geq 9$ to $\leq 12$, yet more preferably of from $\geq 10$ to $\leq 11$, and/or a temperature of $\leq 50$ °C, more preferably a temperature in the range of from $\geq 15$ °C to $\leq 45$ °C.

Generally, all aspects of the present invention discussed herein in the context of the process according to the present invention and/or in the context of the system or apparatus according to the present invention apply *mutatis mutandis* to the use according to the present invention as defined above and below. And *vice versa,* all aspects of the present invention discussed herein in the context of the use according to the present invention apply *mutatis mutandis* to the process according to the present invention and/or to the system or apparatus according to the present invention.

A use according to the invention as defined herein (or a use according to the invention as described herein as being preferred) is preferred, wherein

- the filter medium comprising one or more membrane filter elements is or comprises a membrane filter module, preferably a submerged membrane filter module, comprising one or more polymeric flat sheet membrane laminate filter elements (31)
  and/or
- the concentration device (40) is or comprises a sedimentation device, preferably a lamella separator.

The present invention is further illustrated and explained in the following examples and with regard to the appended figure:

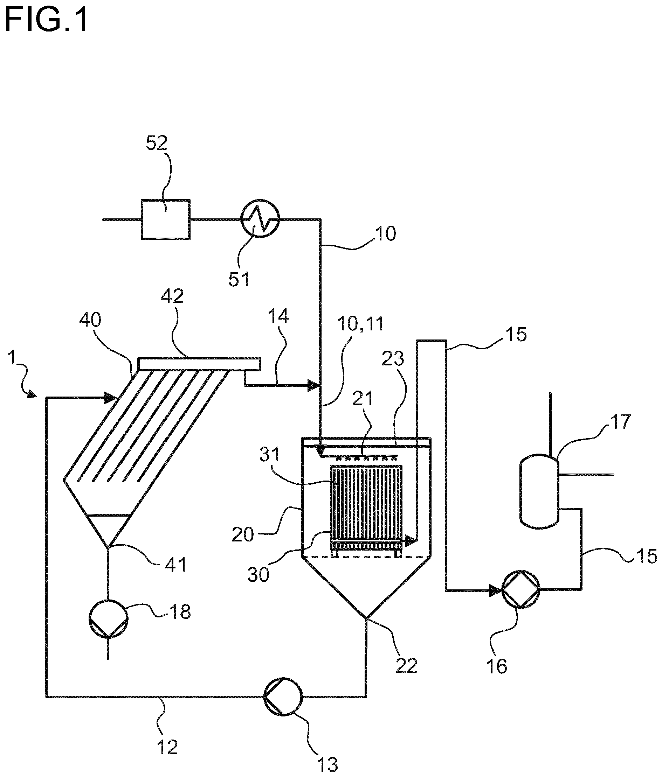

Fig. 1:    Figure 1 schematically shows a system or apparatus for use in a process for producing an aqueous liquid comprising a reduced amount of one or more metal compounds from an aqueous liquid comprising an amount of one or more metal compounds and/or for retrieving metal compounds from an aqueous liquid comprising an amount of one or more metal compounds.

List and explanation of reference signs:

1: System or apparatus for use in a process for producing an aqueous liquid comprising a reduced amount of one or more metal compounds from an aqueous liquid comprising an amount of one or more metal compounds and/or for retrieving metal compounds from an aqueous liquid comprising an amount of one or more metal compounds.

10: Inlet, preferably pipe (representative for one or more pipes), configured for providing an aqueous liquid comprising one or more precipitated metal compounds via a or the at least one dispensing device (21) as feed liquid to the at least one flow tank (20).

11: Pipe (representative for one or more pipes), configured for providing a supernatant from the at least one supernatant collecting device (42) and/or for providing an aqueous liquid comprising one or more precipitated metal compounds, via a or the at least one dispensing device (21) as feed liquid to the at least one flow tank (20).

12: Pipe (representative for one or more pipes), configured for connecting the at least one outlet (22) of the at least one flow tank (20) with the at least one sedimentation device (40).

13: Pump (representative for one or more pumps), preferably for pumping the at least one process liquid from the at least one flow tank (20) to the at least one concentration device (40).

14: Pipe (representative for one or more pipes), configured for connecting the at least one supernatant collecting device (42) with a or with the at least one dispensing device (21), preferably for providing the supernatant from the at least one supernatant collecting device (42) as feed liquid to the at least one flow tank (20).

15: Pipe (representative for one or more pipes), configured for withdrawing permeate from the at least one membrane filter module (30).

16: Pump (representative for one or more pumps), preferably for withdrawing permeate and/or or for pumping permeate from the at least one membrane filter module (30) to the at least one buffer tank (17).

17: Buffer tank, preferably configured for receiving permeate from the at least one membrane filter module (30) and/or for receiving washing liquid for backwashing the one or more membrane filter elements (31) of the at least one membrane filter module (30).

20: Flow tank, configured to receive one or more aqueous feed liquids through at least one dispensing device (21) and to release at least one process liquid through at least one outlet (22).

21: Dispensing device for dispensing to flow tank (20) one or more aqueous feed liquids.

22: Outlet of flow tank (20), for releasing at least one process liquid.

23: Surface of aqueous phase comprising one or more precipitated metal compounds.

30: Filter medium comprising one or more membrane filter elements (31).

31: Membrane filter elements of membrane filter module (30).

40: Concentration device (shown in Fig. 1 schematically as lamella separator, representative for general concentration devices as defined in the present text).

41: Outlet of concentration device (40), for releasing concentrated precipitate.

42: Outlet of concentration device (40), for releasing metal-depleted aqueous liquid.

51: Heat exchanger, preferably for controlling and/or adjusting the temperature of the aqueous feed liquid comprising one or more precipitated metal compounds.

52: Stirred-tank reactor (52), preferably with equipment for pH adjustment, preferably for adjusting and/or controlling the pH of the aqueous feed liquid comprising one or more precipitated metal compounds.

The following examples are meant to further explain and illustrate the invention without limiting its scope.

## Examples:

Example 1: Reducing the amount of metal compounds in an aqueous liquid (part 1)

In the following experiment, the amount of metal compounds was reduced in an aqueous feed liquid comprising one or more metal compounds, resulting in a permeate, and the metal compounds were available for being retrieved from the aqueous feed liquid. The present experiment serves as a model for essential elements of the process of the present invention.

A test filter cell of cylindrical shape fitted with a magnetic stirrer (Merck Millipore®, pressure cell) and - towards the bottom of the test filter cell - a circular NADIR® UH050P polymeric flat sheet membrane (hydrophilic polyethersulfone membrane, nominal molecular weight cut-off 50 kDa, effective membrane area about 32 cm$^2$) was filled on top of the membrane with a one-time volume of an aqueous liquid comprising precipitated compounds of nickel, cobalt and manganese (300 mL, for amounts of precipitated metal compounds see table 1, below) as aqueous feed liquid comprising one or more precipitated metal compounds. Said aqueous feed liquid had a pH in the range of from $\geq 10$ to $\leq 11$ and a temperature of 40 °C. The membrane was positioned in the test filter cell so as to separate the lower part of the test filter cell under the polymeric flat sheet membrane (thus providing room for receiving permeate), from the upper part of the test filter cell above the polymeric flat sheet membrane (thus providing room for receiving the aqueous feed liquid comprising one or more metal compounds). The test filter cell was connected with a feed vessel to feed additional aqueous liquid comprising precipitated compounds of nickel, cobalt and manganese (750 mL, of equal composition as the aqueous liquid comprising precipitated compounds of nickel, cobalt and manganese present in the test filter cell) to the upper part of the test filter cell (above the membrane).

Pressure was then applied to the aqueous feed liquid on the membrane (from the upper side of the membrane) using compressed air. Due to the pressure difference below and above the membrane (transmembrane pressure), a permeate flux through the membrane was observed, while the portion of the aqueous feed liquid not passing the membrane was withheld as retentate. The resulting permeate was transferred to and collected in a permeate vessel. The aqueous feed liquid (from the one-time volume and from the feed vessel) was filtered through the membrane in continuous operation mode until the feed vessel was emptied. The test filter cell was operated in dead-end concentration mode and the liquid level of the test filter cell (after having received the additional aqueous feed liquid from the feed vessel) was reduced to the extent possible (while observing the minimum hold-up of the membrane unit), when a final retentate was received (at the end of the experiment).

During the experiment, volumetric concentration factors ("CF$_v$") were determined at time intervals in each case as the quotient of (i) the total mass of the aqueous feed liquid ("mass of feed") divided by (ii) the difference of the "mass of feed" minus the total mass of the permeate collected since the beginning of the experiment ("mass of permeate"), according to the following equation:

$$CFv = \frac{(mass\ of\ feed)}{(mass\ of\ feed) - (mass\ of\ permeate)}$$

An almost constant transmembrane pressure at a value of about 100 kPa was observed during the experiment until a volumetric concentration factor (CF$_v$) of about 65 was reached.

In this experiment it was also found that (after a run-in period until a volumetric concentration factor of about 5 was reached) the permeate flux remained almost constant (at constant transmembrane pressure and constant temperature) at a value in the range of between about 150 to 170 kg $^*$ m$^{-2}$ $^*$ h$^{-1}$, until the experiment was ended at a volumetric concentration factor of 65.

In addition, the concentration of precipitated compounds of nickel, cobalt and manganese was determined (as mass of metal ion per volume of sample in each case) in representative samples of (i) the aqueous liquid comprising precipitated compounds of nickel, cobalt and manganese (referred to as "aqueous feed liquid" in table 1), (ii) the final retentate received at the end of this experiment and (iii) the combined (and mixed) permeates received in this experiment: For determining the concentration of precipitated compounds of nickel, cobalt and manganese in the final retentate, the final retentate (as the final concentrate received at the bottom of the test filter cell, on top of the membrane, at the end of the experiment) was collected, homogenized by shaking and a sample of the homogenized final retentate was obtained for analysis via a pipette.

For the aqueous feed liquid and the final retenate, samples containing precipitated metal compounds were dissolved by applying a wet chemical digestion method ("Nasschemischer Aufschluss", as is known in the art) and the dissolved samples were subsequently analyzed for their concentration of (previously precipitated) compounds of nickel, cobalt and manganese by means of ICP-OES ("inductively coupled plasma optical emission spectrometry").

In the combined permeates sample, the concentrations of precipitated compounds of nickel, cobalt and manganese were directly measured using ICP-MS (Inductively Coupled Plasma Mass Spectrometry).

The respective results are shown in table 1 below.

Table 1: Amounts of metal compounds in representative samples (part 1)

| Aqueous feed liquid mg / 100 g | | | Final Retentate g / 100 g | | | Combined Permeates mg / 100 g | | |
|---|---|---|---|---|---|---|---|---|
| Ni | Co | Mn | Ni | Co | Mn | Ni | Co | Mn |
| 440 | 77 | 71 | 18.3 | 3.1 | 2.9 | < 0.01 | < 0.01 | < 0.01 |

Example 2: Reducing the amount of metal compounds in an aqueous liquid (part 2)

In the following experiment, the amount of metal compounds was reduced in an aqueous feed liquid comprising one or more metal compounds, resulting in a permeate, and the metal compounds were available for being retrieved from the aqueous feed liquid, in the same way as is explained for example 1 above, with the deviation from the previous protocol that the test filter cell was fitted with a NADIR® UP150P polymeric flat sheet membrane (polyethersulfone membrane, nominal molecular weight cut-off 150 kDa) instead of a NADIR® UH050P polymeric flat sheet membrane .

In this experiment it was found that (after a run-in period until a volumetric concentration factor of about 10 was reached) the permeate flux remained almost constant at a value in the range of between about 90 to 110 kg $* m^{-2} * h^{-1}$ until the experiment was ended at a volumetric concentration factor of about 70. The experiment was carried out at a constant transmembrane pressure of 500 hPa.

In addition, the concentration of precipitated compounds of nickel, cobalt and manganese was determined (as mass of metal ion per volume of sample in each case) in representative samples of (i) the aqueous liquid comprising precipitated compounds of nickel, cobalt and manganese (referred to as "aqueous feed liquid" in table 2) and (ii) the combined (and mixed) permeates received in this experiment as explained in example 1 above. The respective results are shown in table 2 below.

Table 2: Amounts of metal compounds in representative samples (part 2)

| Aqueous feed liquid mg / 100 g | | | Combined Permeates mg / 100 g | | |
|---|---|---|---|---|---|
| Ni | Co | Mn | Ni | Co | Mn |
| 130 | 23.5 | 22.0 | < 0.01 | < 0.01 | < 0.01 |

From the previous experiments and from the results shown in tables 1 and 2 above, the following can be seen: A high and constant permeate flux could be observed in both experiments while the transmembrane pressure also remained constant during the course of the experiments. From this observation it can be concluded that the membrane did not suffer from clogging and the precipitated metal compounds did not negatively impact process performance under the conditions applied.

The precipitated metal compounds present in the aqueous feed liquids could almost completely be removed in both experiments. The metal compounds were concentrated in the retentate from where they can be retrieved for further use.

No fouling could be observed on the polymeric flat sheet membrane used in both experiments during the observation period which ended when very high concentration factors (> 60) were reached.

Example 3: Reducing the amount of metal compounds in an aqueous liquid (part 3)

In the following experiment, conducted in a laboratory-scale system, the amount of metal compounds was reduced in an aqueous feed liquid comprising one or more metal compounds, resulting in a permeate, and the metal compounds were available for being retrieved from the aqueous feed liquid. The present experiment serves as a model for essential elements of the process of the present invention.

At the start of the experiment, a flow tank (20) with conical-shaped bottom comprising a submerged (immersed) filter medium (30) comprising membrane filter elements (31) (Microdyn Nadir, comprising a membrane stack of 3 polymeric membrane pockets as hollow polymeric flat sheet membrane laminate filter elements - Microdyn NADIR® UP150P - connected via a common permeate outlet; overall filtration area of membrane stack: 0.325 m²) was filled (from a storing tank (52) - an industrial bulk container with a volume of 1000 L and a stirrer for stirring its content - via a pump and a dispensing device (21) which was positioned above the submerged filter medium) with an aqueous feed liquid comprising precipitated compounds of nickel and cobalt (for amounts of precipitated metal compounds see table 3, below) as aqueous feed liquid comprising one or more precipitated metal compounds. Said aqueous feed liquid had a pH in the range of from ≥ 10 to ≤ 13 and a temperature of < 50 °C. The liquid level in the flow tank was continuously controlled by a level sensor. A heat exchanger (51) controlled the temperature of the aqueous feed liquid from the storing tank and a temperature sensor controlled the temperature in the flow tank. The aqueous feed liquid (a suspension) was continuously stirred by an agitator to ensure a homogenous feed concentration and to prevent deposition of precipitated metal compounds.

The permeate received from the submerged filter medium was transferred via a buffer tank (17) to a permeate vessel. The pressure difference across the membrane (transmembrane pressure) was generated using a centrifugal pump on the permeate side (16). Due to the vacuum on the pump's suction side, a permeate flow was established across the membrane. The permeate flow was routed to the buffer tank, where the level was controlled by overflow. The overflowing permeate was collected in a permeate vessel which was placed on a scale.

During operation, the laboratory-scale system was operated in dead-end mode, since new aqueous feed liquid was continuously fed to the flow tank and only permeate (free of precipitated metal compounds) was removed. Therefore, the retentate in the flow tank was gradually concentrated over the course of the experiment. Withdrawal of retentate was possible by using a manual valve at the conical shaped bottom of the flow tank.

For backwashing, the centrifugal pump on the permeate side ("permeate pump") could be deactivated and the automatic backwashing valve at the bottom of the buffer tank could be opened for a specified backwashing period. The pressure for backwashing could be obtained due to the hydrostatic height of the buffer tank.

The available aqueous feed liquid comprising one or more metal compounds was concentrated in the laboratory-scale system described above in dead-end filtration mode. In total, 930 kg of feed liquid comprising one or more metal compounds were continuously fed to the flow tank and approx. 925 kg of particle-free permeate were withdrawn during the run time of the experiment (37 h). At the end of the experiment, about 4.28 kg of retentate was obtained, resulting in a volumetric concentration factor ($CF_v$) of 217. This experiment was carried out without retentate withdrawal or permeate backwashing until the end of the entire experiment.

The average permeate flux in this experiment was 77 kg $*$ m$^{-2}$ $*$ h$^{-1}$. The membrane load for the experiment was calculated to be 2850 kg (permeate) m$^{-2}$ (membrane area). The operation temperature in the present experiment was about 40 °C. The permeate flux was controlled by the permeate pump.

Throughout the experiment, three set-points for the permeate flow were chosen: starting at 20 kg $*$ h$^{-1}$, the permeate flow was successively increased to 30 kg $*$ h$^{-1}$ and finally to 35 kg $*$ h$^{-1}$. The slight decrease in operation temperature of 1 °C after 24 h of operation could be linked to the increase in permeate flow. Since only the aqueous feed liquid was heated by the heat exchanger and a higher permeate flow results in a higher feed flow (constant level in the flow tank), a lower operation temperature was observed.

The permeate pressure was the driving force for the membrane separation. During the initial 24 h of the experiment, a constant permeate pressure of - 83 hPa was observed. This means that the increasing concentration of precipitated metal compounds or retentate, respectively, or top-layer formation on the membrane(s), had no significant influence on the process performance under the conditions of the experiment.

The concentration of precipitated compounds of nickel and cobalt (determined by atomic absorption spectroscopy as mass of metal ion per volume of sample in each case) was determined in representative samples of (i) the aqueous liquid comprising precipitated compounds of nickel and cobalt at the start of the experiment, t = 0, (referred to as "aqueous feed liquid" in table 3) and (ii) the permeates received in this experiment at two different points in time after the start of the experiment (t = 1 h and t = 24 h) and at the end of the experiment (t = 37 h) . The respective results are shown in table 3 below.

Table 3: Amounts of metal compounds in representative samples (part 3)

| Sample | Time [h] | Nickel content [mg/kg] | Cobalt content [mg/kg] |
|---|---|---|---|
| Aqueous feed liquid | 0 | 7 | 0.5 |
| Permeate 1 | 1 | < 0.1 | < 0.1 |
| Permeate 2 | 24 | < 0.1 | < 0.1 |
| Permeate 3 | 37 | < 0.1 | < 0.1 |

From the results of this Experiment 3 in a laboratory-scale system and from the results shown in table 3 above, the following can be concluded:
A high and constant permeate flux could be observed during the experiment.

The metal compounds present in the aqueous feed liquid could almost completely be removed and no precipitated metal compounds were found in the permeates received. The metal compounds were concentrated in the retentate from where they could be retrieved for further use.

Example 4: Concentration of one or more precipitated metal compounds

In the following experiment, samples of the retentate from example 3 were subjected to concentration of one or more precipitated metal compounds by sedimentation. The present experiment serves as a model for an essential element of the process of the present invention.

4.1 Samples of 250 mL of (final) retentate from example 3 (a suspension of aqueous liquid with precipitated metal compounds of nickel and cobalt) were obtained and stirred at 25 °C until the dispersion of the precipitated metal compounds in the samples appeared homogenous (visual inspection). Each of the so prepared samples was filled into a 250 mL graduated glass cylinder (graduation: 10 ml correspond to 10 mm in height, one glass cylinder per 250 mL-sample) and the time was stopped while the precipitated compounds present in a sample were allowed to sediment. At the beginning of each experiment (t = 0) and at 5 min, 15 min, 25 min and 40 min thereafter, the sedimentation process was visually inspected and the following parameters were recorded and are shown in table 4 below:

(a) sedimentation distance ("SD", in mm): the distance at which the visible upper end of the sediment of the precipitated compounds was found from the top of the graduated glass cylinder (i.e. the distance from top of the glass cylinder to the visible boundary layer between supernatant and sediment);

(b) sedimentation velocity ("SV", in m/h): the velocity of sedimentation, calculated from the sedimentation distance (see (a) above) at the respective time points when the sedimentation distance was measured.

4.2 From 250 mL-samples which were homogenized and subsequently allowed to sediment according to example 4.1. above, volumes of 50 mL each were drawn from the top of the aqueous liquid with precipitated metal compound (i.e. the upper 50 mL, corresponding to 50 mm distance, from the top of the aqueous liquid with precipitated metal compounds of nickel and cobalt, "supernatant") at different time points (see table 4) so that at t = 0 the 50 mL-sample contained a homogenous dispersion of the precipitated compounds, while in the 50 mL-samples drawn at 15 min and 40 min after the start of the experiment, the concentration or amount of precipitated compounds found in the 50 mL-samples had gradually decreased.

In the 50 mL-samples drawn at t = 0 (start of the experiment), at 15 min and at 40 min after the start of the experiment, the volume-weighted particle size distribution of the precipitated metal compounds was measured in each case by laser diffraction (Malvern Mastersizer 2000 or Malvern Mastersizer 3000, Fraunhofer analysis model, samples were diluted with water and tested for agglomerates by use of ultrasonic sound). The results of these measurements are shown in table 4 below as Dv50-values of the particles found in a respective 50 mL-sample.

4.3 From further 250 mL-samples which were homogenized and subsequently allowed to sediment according to example 4.1. above, volumes of 50 mL were drawn again at different time points as explained in example 4.2 above. The solid mass in said 50 mL-samples was then determined by vacuum-filtering (pressure difference 0.2 to 0.5 bar) each 50 mL-sample (via a 0.2 $\mu$m membrane which had been dried before for 2 h at 80 °C and weighed) and collecting the solid filter residue. Each solid filter residue was then dried for 12 h at 80 °C and weighed. The results of this experiment are also shown in table 4 below as "solid mass in supernatant" (in g/L).

4.4 Similar experiments as described above in experiment 4.1 were also carried out where the 250 mL graduated glass cylinder was positioned at different sliding angles between 30° and 70° and the sedimentation behavior, sliding behavior and flow behavior of the precipitated compounds was analyzed as a function of the sliding angle, as a method of optimizing the design of a concentration device for use in the process of the present invention.

Table 4: Sedimentation of one or more precipitated metal compounds

| Parameter | Sedimentation time [min] | | | | |
|---|---|---|---|---|---|
| | 0 | 5 | 15 | 25 | 40 |
| SD [mm] | 0 | 60 | 242 | 244 | 245 |
| SV [m/h] | 0 | 0.72 | 0.97 | 0.58 | 0.37 |
| Solid mass in supernatant [g/L] | 50 | n.a. | 0.3 | 0.2 | 0.1 |
| Particle size distribution Dv50 [$\mu$m] | $\geq 12$ | n.a. | $\geq 4.5$ | n.a. | $\geq 4$ |
| n.a.: no data available | | | | | |

From this example 4 and the results shown in table 4 above it can be seen that subjecting at least a part of the retentate (comprising one or more precipitated metal compounds) from a previous step of filtration through at least one filter medium (comprising one or more membrane filter elements) to concentration (in the present case: by sedimentation) of the one or more precipitated metal compounds is a quick and effective method for i.a. reducing the amount of larger particles in an aqueous liquid comprising one or more precipitated metal compounds. It can therefore be concluded that such concentration step is e.g. suited to reduce the risk that the performance of a filter medium (comprising one or more membrane filter elements) - which is also used in the same process - will be adversely affected because it may e.g. be blocked or partially blocked by larger particles.

**Claims**

1. Process for

   - producing an aqueous liquid comprising a reduced amount of one or more metal compounds
   and/or
   - retrieving one or more metal compounds,

   from an aqueous liquid comprising an amount of one or more metal compounds, comprising the following steps:

   P1) providing an aqueous feed liquid comprising one or more precipitated metal compounds which has a pH in the range of from $\geq 4$ to $\leq 13$ and/or a temperature of $\leq 50$ °C
   and/or
   preparing an aqueous feed liquid comprising one or more precipitated metal compounds from an aqueous liquid comprising metal ions, comprising adjusting in the aqueous liquid comprising metal ions a pH in the range of from $\geq 4$ to $\leq 13$ and/or a temperature of $\leq 50$ °C,
   P2) subjecting at least a part of the aqueous feed liquid comprising one or more precipitated metal compounds from step P1) to filtration through at least one filter medium (30) comprising one or more membrane filter elements (31) to receive a retentate and a permeate,
   P3) subjecting at least a part of the retentate from step P2) and/or at least a part of the aqueous feed liquid comprising one or more precipitated metal compounds from step P1) to concentration of the one or more precipitated metal compounds, to receive a concentrated precipitate and a metal-depleted aqueous liquid
   and
   P4) withdrawing at least a part of the permeate from step P2).

2. Process according to claim 1 further comprising the steps:

   P5) subjecting at least a part of the metal-depleted aqueous liquid, preferably of the supernatant, from step P3)

   and preferably
   at least a part of the aqueous feed liquid comprising one or more precipitated metal compounds from step P1) and/or at least a part of the retentate from step P2),

   to filtration through at least one filter medium comprising one or more membrane filter elements, preferably in a further step P2), to receive a retentate or a further retentate and a permeate or a further permeate,
   and/or
   P6) withdrawing at least a part of the concentrated precipitate from step P3), preferably as a second process product;
   and/or
   P7) backwashing the at least one filter medium (30) and/or the one or more membrane filter elements (31), preferably comprising flushing or purging the at least one filter medium and/or the one or more membrane filter elements with a stream of a liquid, preferably water, flowing in the opposite direction of the permeate stream through the at least one filter medium and/or the one or more membrane filter elements.

3. Process according to any of the preceding claims, preferably according to claim 2, wherein the process

   - is performed as continuous process or is performed in continuous mode,
   and/or
   - comprises at least the steps P1), P2), P3), P4) and P5) and at least the steps P2), P3) and P5) are performed as or participate in a circulatory process.

4. Process according to any of the preceding claims, preferably according to claim 3, wherein step P3)

- comprises subjecting at least a part of the retentate from step P2) and/or at least a part of the aqueous feed liquid comprising one or more precipitated metal compounds from step P1) and/or at least a part of the metal-depleted aqueous liquid, preferably the supernatant, from a previous step P3) to concentration, preferably to receive a concentrated precipitate or a further concentrated precipitate and a metal-depleted aqueous liquid, preferably a supernatant, or a further metal-depleted aqueous liquid, preferably a further supernatant, and/or
- further comprises subjecting at least a part of the metal-depleted aqueous liquid, preferably of the supernatant, from a previous step P3) to concentration, preferably to receive a concentrated precipitate or a further concentrated precipitate and a metal-depleted aqueous liquid, preferably a supernatant, or a further metal-depleted aqueous liquid, preferably a further supernatant.

5. Process according to any of the preceding claims, wherein the one or more membrane filter elements (31) of the at least one filter medium comprising one or more membrane filter elements are selected from the group consisting of

- one or more ceramic flat sheet membrane filter elements,
- one or more polymeric flat sheet membrane filter elements, preferably one or more polymeric flat sheet membrane laminate filter elements,
- one or more polymeric capillary membrane filter elements and
- combinations of the foregoing membrane filter elements,

wherein more preferably the at least one filter medium is or comprises one or more polymeric flat sheet membrane filter elements, yet more preferably one or more polymeric flat sheet membrane laminate filter elements and yet even more preferably one or more hollow polymeric flat sheet membrane laminate filter elements.

6. Process according to any of the preceding claims, wherein the concentration of the one or more precipitated metal compounds in step P3) is performed by or comprises at least one method selected from the group consisting of

- bag filtering,
- band filtering,
- centrifugal decanting,
- centrifugation,
- dynamic membrane filtration, preferably dynamic membrane crossflow filtration;
- dynamic sieve filtration,
- filter pressing,
- sedimentation,
- vacuum filtering and
- combinations of the foregoing methods,

wherein preferably the concentration of the one or more precipitated metal compounds is achieved by or comprises sedimentation and/or the concentrated precipitate received in step P3) is a sediment.

7. Process according to any of the preceding claims, wherein

- the process is performed at a transmembrane pressure of the one or more membrane filter elements (31) of the at least one filter medium (30) in the range of from 10 to 800 hPa, preferably of from 50 to 600 hPa, more preferably of from 100 to 400 hPa, and/or
- at least a part of the filtration through the at least one filter medium comprising one or more membrane filter elements in step P2) is performed as crossflow filtration, preferably with a flow direction perpendicular to the one or more membrane filter elements of the at least one filter medium.

8. Process according to any of the preceding claims, wherein at least a part of the one or more membrane filter elements (31) of the at least one filter medium (30)

- has a nominal molecular weight cut-off of $\geq$ 45,000 Da, preferably of $\geq$ 50,000 Da, more preferably of $\geq$ 75,000 Da, yet more preferably of $\geq$ 100,000 Da and even yet more preferably of $\geq$ 125,000 Da;

and/or
- has a pure water flux permeability at 38 to 42 °C and at a transmembrane pressure of 100 hPa of $\geq$ 90, preferably in the range of from 90 to 110, kg/m$^2$/h/100 kPa, and/or
- has a nominal pore size of < 100 nm, preferably of $\leq$ 75 nm and more preferably of $\leq$ 50 nm, and/or
- comprise an organic polymer, preferably selected from the group consisting of polyethersulfone, polysulfone, polyvinylidenefluoride, polypropylene and mixtures thereof,

wherein preferably the organic polymer is or comprises polyethersulfone.

9. Process according to any of the preceding claims wherein

- two or all three of the options selected from the group consisting of

- at least a part of the aqueous feed liquid comprising one or more precipitated metal compounds from a step P1),
- at least a part of the retentate from a step P2) and
- at least a part of the metal-depleted aqueous liquid, preferably of the supernatant, from a step P3),

are fed to or combined to result in an aqueous phase comprising one or more precipitated metal compounds, and/or
- at least a part of the aqueous feed liquid comprising one or more precipitated metal compounds from the and/or from a step P1) and/or at least a part of the retentate from the and/or from a step P2) and/or at least a part of the metal-depleted aqueous liquid, preferably of the supernatant, from the and/or from a step P3) is fed to or combined to result in an aqueous phase comprising one or more precipitated metal compounds, wherein preferably

- at least a part of said aqueous phase comprising one or more precipitated metal compounds is subjected to filtration through at least one filter medium (30) comprising one or more membrane filter elements (31), preferably in a further step P2), preferably to receive a retentate or a further retentate and a permeate or a further permeate, and/or
- at least a part of said aqueous phase comprising one or more precipitated metal compounds is subjected to concentration, preferably in a further step P3), preferably to receive a concentrated precipitate or a further concentrated precipitate and a metal-depleted aqueous liquid, preferably a supernatant, or a further metal-depleted aqueous liquid, preferably a further supernatant.

10. Process according to any of the preceding claims, preferably according to claim 9, wherein

- the at least one filter medium (30) comprising one or more membrane filter elements (31) is comprised by, comprised in, or is, at least one submerged membrane filter module, and/or
- the at least one submerged membrane filter module (30) is arranged in or situated in a flow tank (20), wherein preferably the flow tank (20) comprises the aqueous phase comprising one or more precipitated metal compounds and the at least one submerged membrane filter module (30) is submerged under the surface (23) of and is at least partly covered by said aqueous phase, and/or
- step P1) comprises providing the aqueous feed liquid comprising one or more precipitated metal compounds to the or a flow tank (20), preferably comprising the or an aqueous phase comprising one or more precipitated metal compounds and the or at least one submerged membrane filter module (30), submerged under the surface (23) of said aqueous phase, preferably at a position below the surface of said aqueous phase (23) comprising one or more precipitated metal compounds and above the upper end of the at least one submerged membrane filter module (30), preferably so that crossflow conditions are generated or enhanced at at least a part of the one or more membrane filter elements of the submerged membrane filter module (30), preferably with a flow direction perpendicular to the one or more membrane filter elements (31) of the at least one filter medium.

**11.** Process according to any of the preceding claims wherein

- the precipitated metal compounds present

- in the feed liquid comprising one or more precipitated metal compounds in step P1) and/or in a step P1) and/or
- in the retentate in step P2) and/or in a step P2)
and/or
- in the metal-depleted aqueous liquid, preferably in the supernatant, in step P3) and/or in a step P3),
and/or
- in the aqueous phase comprising one or more precipitated metal compounds,

comprise one or more metal compounds selected from the group consisting of nickel compounds, cobalt compounds, manganese compounds and mixtures thereof and/or one or more metal compounds selected from the group consisting of aluminium compounds and zinc compounds,
and/or
- step P3) comprises applying to the at least a part of the permeate from step P2) and/or from a step P2) a reduced pressure, more preferably a pressure in the range of from 10 to 750 hPa, preferably of from 50 to 500 hPa, more preferably of from 100 to 400 hPa,
and/or
- wherein the process, preferably the process according to any of claims 9 to 10, is conducted so as to adjust or maintain the amount or concentration of the one or more precipitated metal compounds present in the aqueous phase comprising one or more precipitated metal compounds in the range of from 1 to 10 mass-%, relative to the total mass of the aqueous phase comprising one or more precipitated metal compounds,
and/or
- the process comprises operating at a permeate flux in the range of from 20 to 200 kg $* m^{-2} * h^{-1}$, preferably of from 50 to 175 kg $* m^{-2} * h^{-1}$, and more preferably of from 70 to 150 kg $* m^{-2} * h^{-1}$.

**12.** System or apparatus (1) for use in a process for

- producing an aqueous liquid comprising a reduced amount of one or more
metal compounds
and/or
- retrieving metal compounds

from an aqueous liquid comprising an amount of one or more metal compounds, comprising at least the following components:

S1) at least one flow tank (20), configured to receive one or more aqueous feed liquids through at least one dispensing device (21) and to release at least one process liquid through at least one outlet (22),
S2) at least one membrane filter module (30), preferably at least one submerged membrane filter module, preferably comprising at least one filter medium comprising one or more membrane filter elements (31), configured to receive a process liquid and to release a permeate,
wherein the at least one membrane filter module is arranged in or situated in the at least one flow tank (20) and preferably is submerged in an aqueous phase comprising one or more precipitated metal compounds which is present in the at least one flow tank (20),
and wherein preferably the at least one membrane filter module (30) is configured for being run under crossflow conditions,
S3) at least one concentration device (40), preferably at least one sedimentation device, configured to receive at least one process liquid from the at least one flow tank (20) and preferably configured for concentrating one or more precipitated metal compounds, and configured to release

- a concentrated precipitate, preferably a sediment, preferably through at least one outlet (41)
and
- a metal-depleted aqueous liquid, preferably a supernatant, preferably through outlet (42).

**13.** System or apparatus according to claim 12, further comprising the following components:

S4) one or more inlets, preferably comprising one or more pipes (10), configured for providing an aqueous liquid comprising one or more precipitated metal compounds

via a or the at least one dispensing device (21) as feed liquid to the at least one flow tank (20),

and/or

S5) one or more pipes (11), configured for providing a supernatant from the at least one supernatant collecting device (42) and/or for providing an aqueous liquid comprising one or more precipitated metal compounds,

via a or the at least one dispensing device (21) as feed liquid to the at least one flow tank (20),

and/or

S6) one or more pipes (12), configured for connecting the at least one outlet (22) of the at least one flow tank (20) with the at least one sedimentation device (40),

wherein preferably the one or more pipes (12) comprise one or more pumps (13), preferably for pumping the at least one process liquid from the at least one flow tank (20) to the at least one concentration device (40),

and/or

S7) one or more pipes (14), configured for connecting the outlet (42) of the at least one concentration device (40) with a or with the at least one dispensing device (21), preferably for providing the metal-depleted aqueous liquid, preferably the supernatant, from the at least one concentration device (40) as feed liquid to the at least one flow tank (20),

and/or

S8) one or more pipes (15), configured for withdrawing permeate from the at least one membrane filter module (30),

wherein preferably the one or more pipes (15) comprise at least one pump (16), preferably for withdrawing permeate and/or or for pumping permeate from the at least one membrane filter module (30) to the at least one buffer tank (17),

and/or

S9) at least one buffer tank (17), preferably configured for receiving permeate from the at least one membrane filter module (30) and/or for receiving washing liquid for backwashing the one or more membrane filter elements (31) of the at least one membrane filter module (30),

wherein preferably the at least one buffer tank (17) is connected with the one or more pipes (15) and/or the at least one pump (16), preferably for withdrawing or pumping permeate from the at least one membrane filter module (30) to the at least one buffer tank (17), or for pumping washing liquid from the at least one buffer tank to the at least one membrane filter module (30)

and/or

S10) at least one heat exchanger (51), preferably positioned at the inlet (10), preferably for controlling and/or adjusting the temperature of the aqueous feed liquid comprising one or more precipitated metal compounds or for adjusting the temperature to produce or provide an aqueous feed liquid comprising one or more precipitated metal compounds for use in the process of the present invention,

and/or

S11) at least one stirred-tank reactor (52) with equipment for pH adjustment, preferably positioned at the inlet (10), preferably upstream of the at least one heat exchanger, preferably for adjusting and/or controlling the pH of the aqueous feed liquid comprising one or more precipitated metal compounds or for adjusting the pH to produce or provide an aqueous feed liquid comprising one or more precipitated metal compounds for use in the process of the present invention.

14. Use of a filter medium (30) comprising one or more membrane filter elements (31),

in combination with a concentration device, preferably a sedimentation device,

- for reducing the amount of metal ions in an aqueous liquid comprising metal ions and/or for retrieving metal ions from an aqueous liquid comprising metal ions

and/or

- for reducing the amount of one or more precipitated metal compounds in an aqueous liquid comprising an amount of one or more precipitated metal compounds and/or for retrieving one or more precipitated metal compounds from an aqueous liquid comprising an amount of one or more precipitated metal compounds,

wherein preferably the aqueous liquid comprising an amount of one or more precipitated metal compounds has a pH in the range of from $\geq 4$ to $\leq 13$, more preferably in the range of from $\geq 9$ to $\leq 12$, yet more preferably of from $\geq 10$ to $\leq 11$, and/or a temperature of $\leq 50$ °C, more preferably a temperature in the range of from $\geq 15$ °C to $\leq 45$ °C.

15. Use according to claim 14, wherein

- the filter medium comprising one or more membrane filter elements is or comprises a membrane filter module, preferably a submerged membrane filter module, comprising one or more polymeric flat sheet membrane laminate filter elements (31)
and/or
- the concentration device (40) is or comprises a sedimentation device, preferably a lamella separator.

# FIG.1

Europäisches
Patentamt

European
Patent Office

Office européen
des brevets

# EUROPEAN SEARCH REPORT

Application Number

EP 19 17 8547

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2008/060997 A1 (MUSALE DEEPAK A [US] ET AL) 13 March 2008 (2008-03-13) * figure 1 * * paragraphs [0032], [0034], [0039] - [0048], [0069], [0071] * | 1-15 | INV. C02F1/44 ADD. C02F101/20 C02F1/52 |
| X | EP 1 375 439 A1 (CANON KK [JP]) 2 January 2004 (2004-01-02) * figure 1 * * paragraphs [0027] - [0040], [0044], [0045] * | 1-15 | |
| X | US 2002/003112 A1 (GOLDEN JOSH H [US]) 10 January 2002 (2002-01-10) * figure 1 * * paragraphs [0020] - [0032] * | 1-15 | |
| X | US 6 348 154 B1 (STEWART DAVID R [US]) 19 February 2002 (2002-02-19) * figure 2 * * column 1, line 65 - column 4, line 7 * | 1-15 | |
| X | US 2011/278224 A1 (LIAO ZHIMIN [CN]) 17 November 2011 (2011-11-17) * figures 1, 2 * * paragraphs [0010] - [0026], [0039] - [0042] * | 1-15 | TECHNICAL FIELDS SEARCHED (IPC) C02F |
| X | WO 2010/068578 A1 (KATANA ENERGY LLC [US]; WALLACE PAUL STEVEN [US]) 17 June 2010 (2010-06-17) * paragraphs [0039] - [0041] * * figure 2 * | 1-15 | |

The present search report has been drawn up for all claims

| Place of search | Date of completion of the search | Examiner |
|---|---|---|
| The Hague | 15 November 2019 | Onel Inda, Santiago |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 19 17 8547

This annex lists the patent family members relating to the patent documents cited in the above-mentioned European search report.
The members are as contained in the European Patent Office EDP file on
The European Patent Office is in no way liable for these particulars which are merely given for the purpose of information.

15-11-2019

| Patent document cited in search report | | Publication date | Patent family member(s) | | Publication date |
|---|---|---|---|---|---|
| US 2008060997 | A1 | 13-03-2008 | CA | 2687237 A1 | 13-03-2008 |
| | | | US | 2008060997 A1 | 13-03-2008 |
| | | | WO | 2008030654 A1 | 13-03-2008 |
| EP 1375439 | A1 | 02-01-2004 | CN | 1475451 A | 18-02-2004 |
| | | | EP | 1375439 A1 | 02-01-2004 |
| | | | KR | 20040002594 A | 07-01-2004 |
| | | | TW | 589284 B | 01-06-2004 |
| | | | US | 2004026326 A1 | 12-02-2004 |
| US 2002003112 | A1 | 10-01-2002 | AU | 7929501 A | 21-01-2002 |
| | | | CN | 1449362 A | 15-10-2003 |
| | | | EP | 1301439 A1 | 16-04-2003 |
| | | | US | 2002003112 A1 | 10-01-2002 |
| | | | WO | 0204362 A1 | 17-01-2002 |
| US 6348154 | B1 | 19-02-2002 | AU | 2097199 A | 19-07-1999 |
| | | | US | 6348154 B1 | 19-02-2002 |
| | | | WO | 9933551 A1 | 08-07-1999 |
| US 2011278224 | A1 | 17-11-2011 | CN | 101891280 A | 24-11-2010 |
| | | | EP | 2386524 A1 | 16-11-2011 |
| | | | JP | 5260617 B2 | 14-08-2013 |
| | | | JP | 2011240326 A | 01-12-2011 |
| | | | US | 2011278224 A1 | 17-11-2011 |
| WO 2010068578 | A1 | 17-06-2010 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **V. MAVROV et al.** *Journal "Desalination,* 2003, vol. 157, 97-104
- **J. MACDOUGAL et al.** *Journal "Solid State Technology,* March 2006, www.solid-state.com
- **F. FU et al.** *Journal of Environmental Management,* 2011, vol. 92, 407-418